# EUROPEAN PATENT SPECIFICATION

(11) **EP 2 801 285 B1**
(45) Date of publication and mention of the grant of the patent: **06.07.2016**
(21) Application number: 14167136.2
(22) Date of filing: 06.05.2014
(51) Int. Cl.: A47B 3/00, A47B 13/02, A47B 95/00, F16C 33/20

(54) **AXLE ATTACHMENT MEANS**
ACHSBEFESTIGUNGSMITTEL
SUPPORTS DE FIXATION D'ESSIEU

(30) Priority: 07.05.2013 SE 1350553
(43) Date of publication of application: 12.11.2014
(73) Proprietor: Charles L. Strand Enskild Firma, 43650 Hovås (SE)
(72) Inventor: Strand, Charles, SE-436 50 HOVÅS (SE)
(74) Representative: Cederbom, Hans Erik August

(56) References cited:
- EP-A2- 1 627 578
- DE-U1- 20 308 231
- DE-U1-202005 012 701

## Description

The present invention concerns an attachment means for an axle of an adjustable foldable bed or another piece of furniture having a movable part.

There are problems to provide efficient and safe bearing in such adjustable beds and other similar adjustable movable parts in furniture. Efficient manufacture of the furniture is not made possible since bedsteads with the appurtenant frame and upper parts are difficult to manufacture separate from each other and with suitable covering.

Examples of bearing for axles are shown, among others, in DE 20 2005 012701 U1. In that connection, the axle requires a special flange-shaped adaptation of the outer ends of slot-shaped receiving holders for the axle. Accordingly, an expensive, dimensionally accurate design, and the bearing surface for the axle will furthermore be minimal.

Another design of axle bearing is shown as an example in CH 680301 A5, but also this bearing is complicated and consists of many parts.

Therefore, the main object of the present invention is primarily to solve, among other things, the above mentioned problems and allow providing an attachment means that consists of few parts and is simple to apply as well as attach in place.

Said object is achieved by means of an attachment means according to the present invention, which essentially is characterized in that a holder intended for an axle in question, and which is provided with a recess open in the upward direction, comprises support flanges projecting laterally from the recess in diametrically opposite direction from each other on a common level as well as an attachment end portion extending perpendicularly from said support flanges, internally in said holder, there being detachably receivable an axle bearing, which is made of plastic material having bearing properties, for instance polypropylene, that an upper level of said axle bearing is flush with the upper support surface of the support flanges, that the attachment end portion extends up to a level surmounting the upper carrying surface of the holder, and that, at the top of the attachment end portion, there is arranged a flange intended for securing purposes, and which projects in the direction away from the support flanges and the axle holder and extends along the attachment end portion.

The invention is described below in the form of a preferred embodiment example, reference being made to the accompanying drawings, in which
Fig. 1 shows part of an adjustable bed frame having attachment means for axles according to the invention,
Fig. 2 shows a perspective view of a holder for the attachment means,
Fig. 3 shows a perspective view of said holder with axle bearing inserted,
Fig. 4 shows a perspective view of a holder with applied fastening part for the connection to intermediate part of the bed,
Fig. 5 shows the bolting of the fastening part to the holder,
Figs. 6-8 show similar design of holder as well as the attachment thereof,
Fig. 9 shows variant of attachment means having entirely smooth back side on its attachment end portion,
Figs. 10-15 show variant with axle and axle bearing and securing mechanism therefor, wherein,

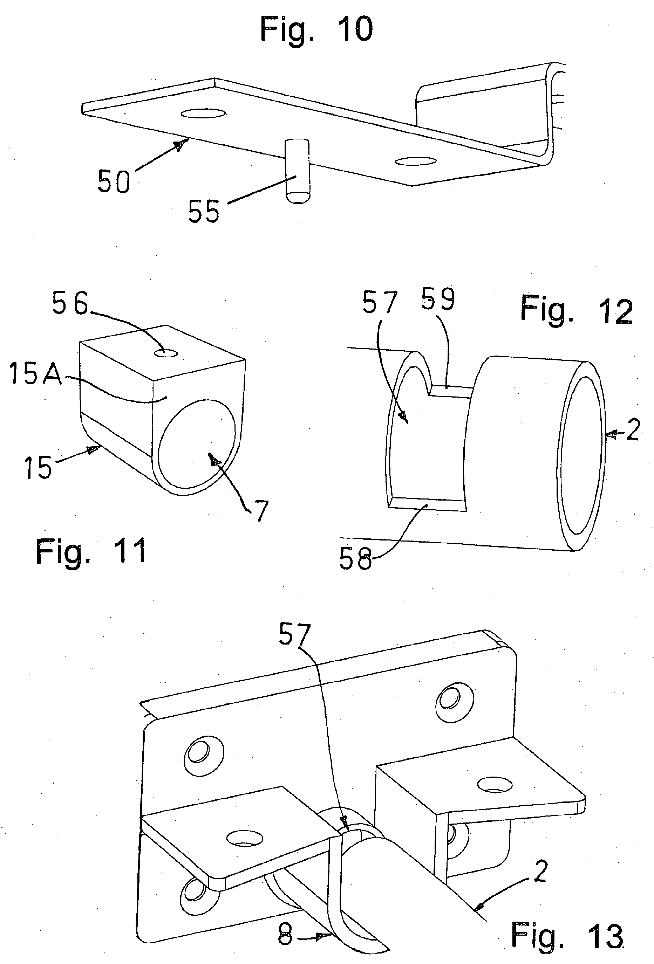

Fig. 10 shows securing sheet-metal plate having attachment upright projecting downward,
Fig. 11 shows an axle bearing having receiving hole for the attachment upright on the plate,
Fig. 12 shows recess in axle for said attachment upright,
Fig. 13 schematically shows the axle with axle holder inserted,

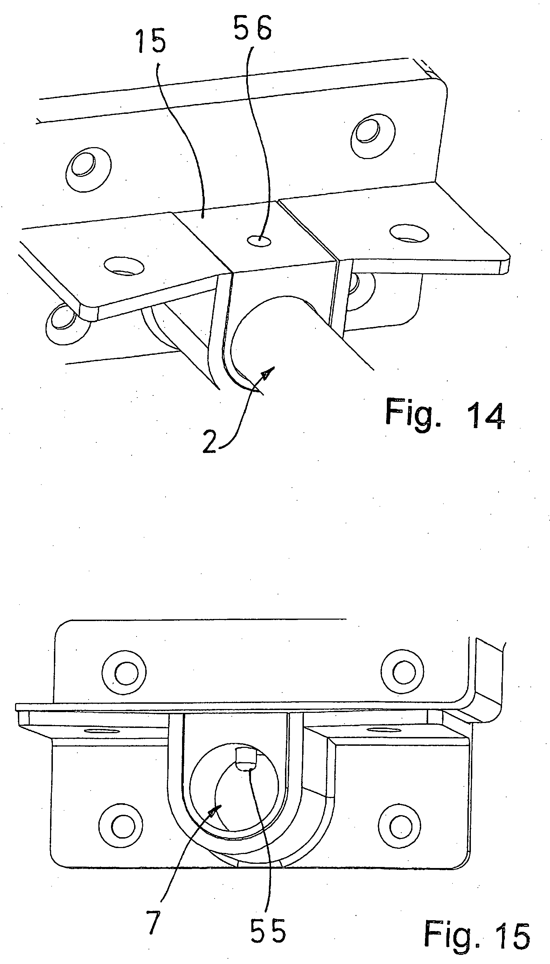

Fig. 14 shows the axle received in the lockable axle bearing, and
Fig. 15 shows locked axle bearing without axle end receivable therein.

An attachment means 1 according to the present invention and which is intended for an axle 2 of a foldable bed 3, which is mechanically adjustable in desired position I and angle X, or another piece of furniture having a movable part 4, 5, is formed of a holder 8, which is intended for an axle 2 in question and provided with a recess 7 open in the upward direction 6. Said holder 8 comprises paired support flanges 12, 13 projecting diametrically opposite laterally 10, 11 from the recess 7 as well as an attachment end portion 14 extending perpendicularly from said flanges 12, 13. In that connection, an axle bearing 15 is detachably receivable internally in said holder 8.

Said holder 8 is preferably in the form of a cast metal body of aluminium provided with fastening holes 16, 17, 18 for screws and/or bolts in the support flanges 12, 13 and/or in the attachment end portion 14.

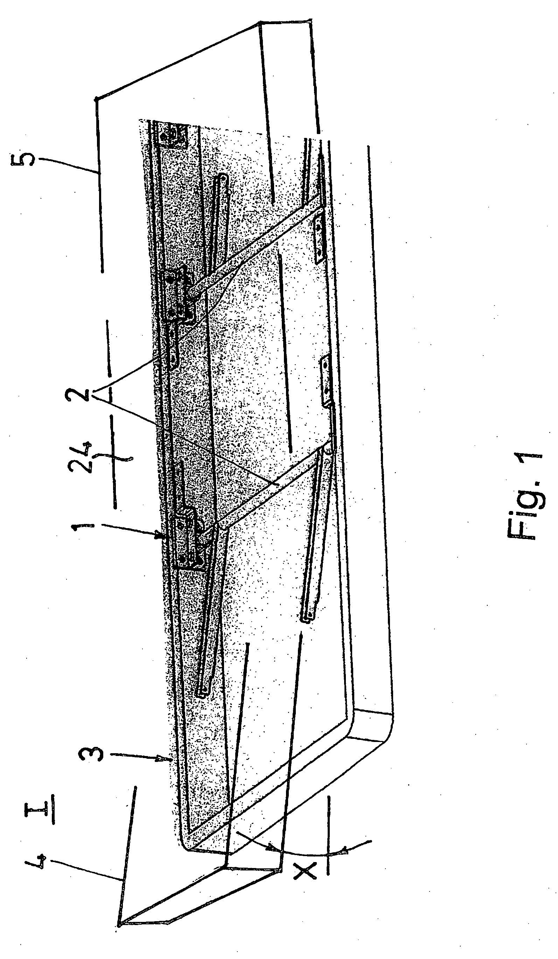

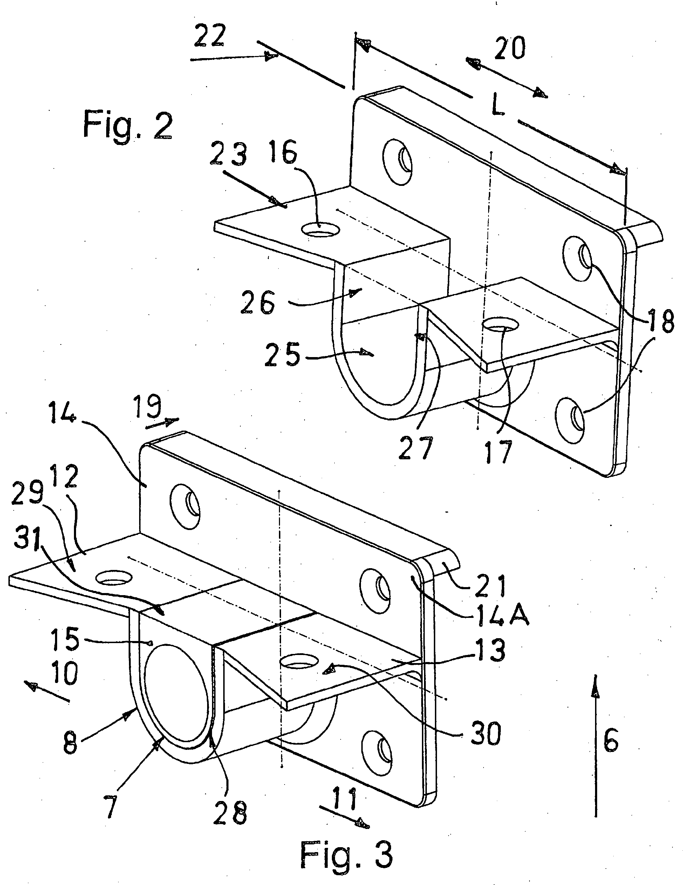

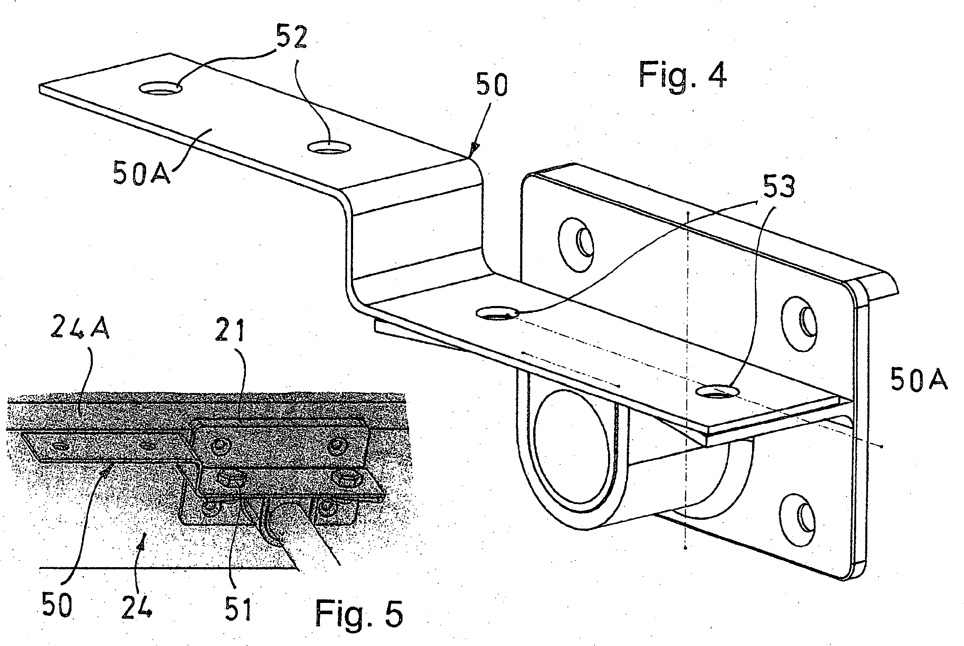

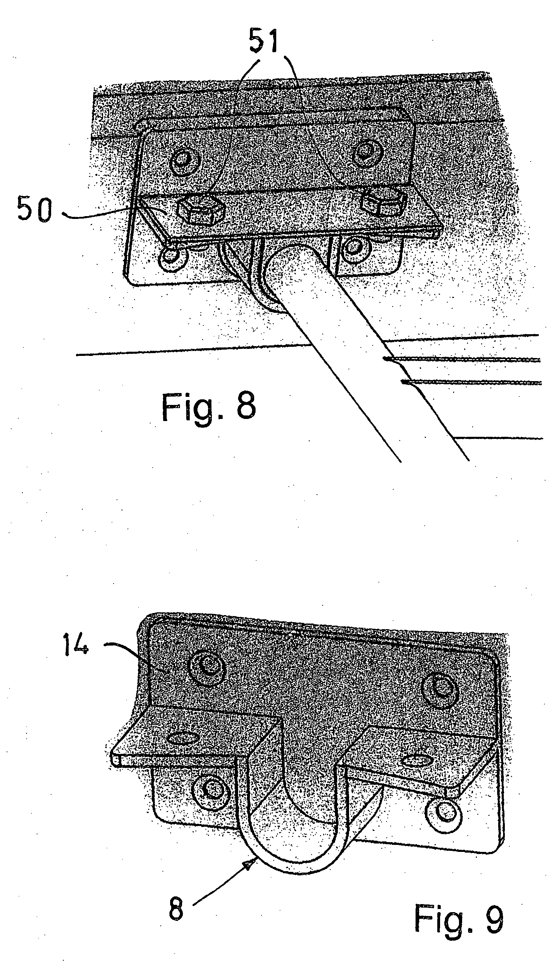

At the top 14A of the attachment end portion 14, there is arranged, as shown in Figs. 1-8, a flange 21 projecting in the direction away 19 from the support flanges 12, 13 and the axle holder 8 and extending along 20 the attachment end portion 14, which flange is intended for securing purposes. For instance, said flange 21 may abut against an upper 24A edge surface of a bed frame 24 or on another part of the same that is suitable as anvil and support before the bolting of the attachment means 1.

The mounting flange 21 suitably extends along the length extension L of the entire attachment end portion 14, and which attachment end portion 14 in turn extends up to a level 22 that surmounts the upper carrying surface 23 of the holder 8 on which a bed frame 24 rests in a mounted position.

The two support flanges 12, 13, which project laterally 10, 11, project in the diametrically opposite direction 10, 11 from being on a common level at the upper portion of the holder. The internal recess 7 of the holder 8 has an arched bottom surface 25 and with straight parallel side walls 26, 27. An axle bearing 15 detachably receivable in said recess 7 is made of plastic material having good bearing properties, for instance polypropylene. Detachable interconnection of the axle bearing 15 in the holder 8 is made possible by a securing mechanism 28 being arranged to act between the recess 7 in the holder 8 and said axle bearing 15. An even level of the carrying and supporting parts of the attachment means 1 is provided thanks to the upper level 31 of said axle bearing 15 being flush with the upper support surface 29, 30 of the support flanges.

An attachment means 1 made according to the present invention is as suitable to apply both to the upper and lower lying part of an adjustable bed, i.e., the head-end 4 and the foot-end 5, respectively, of the bed 3.

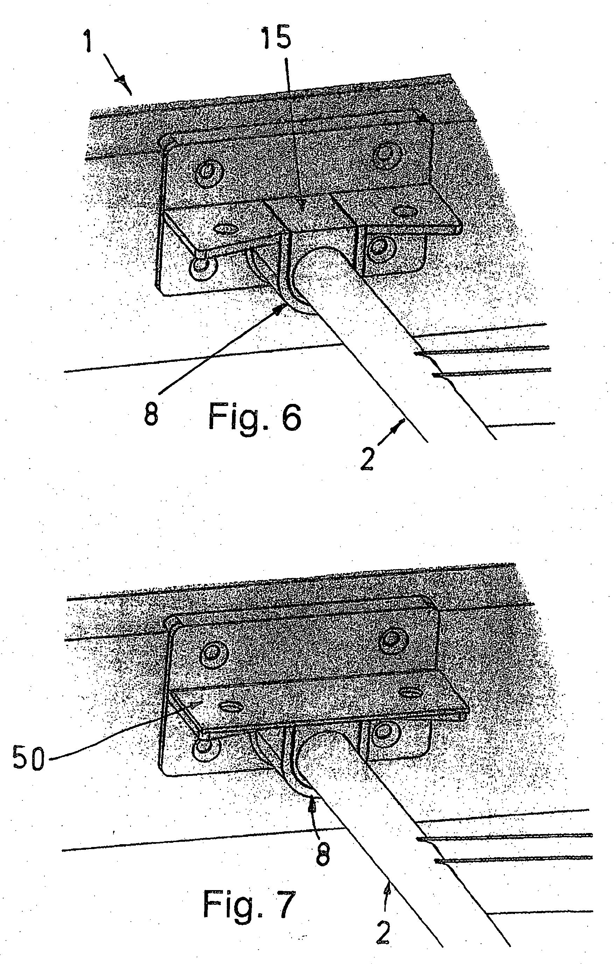

Attachment of the attachment means 1 to a movable furniture part, such as the head-end support part and the foot-end part, respectively, may be effected by means of a straight or bent plate 50, one end 50A of which is bolted by a bolt 51 in holes 52, 53 therefor. In doing so, also the rotatably journalled axle of the bed is locked. In Fig. 7, it is shown how said axle 2 and the axle bearing 15 thereof is secured by means of a flat plate 50, which is bolted by a bolt 51 in holes 16, 17 in the attachment means 1. The bent plate 50 is in turn bolted in desired movable furniture part by means of screws by means of the other free end 50B of the plate.

An upright 55, which is loose or projects underneath a said plate 50, is arranged to be received in a hole 56, which extends through the upper part 15A of the axle bearing 15 into the axle receiving recess 7 therein.

By allowing arranging a recess 57 in the axle 2 in the form of a segment or a slot, for instance by sawing or milling off a portion of the axle 2, a recess is provided, the end edges 58, 59 of which form stops for the continued rotary motion of said axle 2 and which interacts with said through upright 55. This at the same time as the upright efficiently secures the axle bearing 15 and the axle 2 and prevents the same from being pulled out in the axial direction apart from each other, particularly upon the mounting of the parts as one unit to the furniture frame 3.

The nature and the function of the invention should have been clear from what is described above and shown in the drawings.

Naturally, the invention is not limited to the embodiments described above and shown in the accompanying drawings. Modifications are feasible, particularly as for the nature of the different parts, or by using an equivalent technique, without departing from the protection area of the invention, such as it is defined in the claims.

## Claims

1. Attachment means (1) for an axle (2) of an adjustable foldable bed (3) or another piece of furniture having a movable part (4, 5), wherein a holder (8) intended for an axle (9) in question, and which is provided with a recess (7) open in the upward direction (6), comprises support flanges (12, 13) projecting laterally (10, 11) from the recess (7) in diametrically opposite direction (10, 11) from each other on a common level as well as an attachment end portion (14) extending perpendicularly from said support flanges (12, 13), internally in said holder (8), there being detachably received an axle bearing (15), which is made of plastic material having bearing properties, for instance polypropylene, wherein an upper level (31) of said axle bearing (15) is flush with the upper support surface (29, 30) of the support flanges, wherein the attachment end portion (14) extends up to a level (22) surmounting the upper carrying surface (23) of the holder, and wherein, at the top (14A) of the attachment end portion (14), there is arranged a flange (21) intended for securing purposes, and which projects in the direction away (19) from the support flanges (12, 13) and the axle holder (8) and extends along (20) the attachment end portion (14).

2. Attachment means according to claim 1, **characterized in that** the holder (8) is in the form of a cast metal body having fastening holes (16, 17, 18) in the support flanges (12, 13) and/or in the attachment end portion (14).

3. Attachment means according to any one of the above claims, **characterized in that** the mounting flange (21) extends along the length extension (L) of the entire attachment end portion.

4. Attachment means according to any one of the above claims, **characterized in that** the support flanges (12, 13) are situated at the upper portion of the holder.

5. Attachment means according to claim 4, **characterized in that** the recess (7) of the holder (8) has an arched bottom surface (25) and with straight parallel side walls (26, 27).

6. Attachment means according to any one of the above claims, **characterized in that**, between the axle bearing (15) and the recess (7), a securing mechanism (28), for instance a resilient hook, is arranged.

7. Attachment means according to any one of the above claims, **characterized in that** an upright (55), which projects in the downward direction from an attachment plate (50) being boltable onto the support flanges (12, 13) of the holder, or a separate one, is receivable in a through hole (56) into the inner space (7) of the axle bearing (15) as well as in a recess (57) in the axle (2) for the securing of said parts to each other and for forming a stop for the rotary motion of the axle.

## Patentansprüche

1. Befestigungsmittel (1) für eine Achse (2) eines verstellbaren klappbaren Bettes (3) oder anderen Möbelstückes, das ein bewegliches Teil (4, 5) aufweist, wobei ein Halter (8), der für eine betreffende Achse (9) vorgesehen ist und der mit einer Ausnehmung (7) versehen ist, die in einer Richtung nach oben (6) offen ist, Stützflansche (12, 13), die seitlich (10, 11) von der Ausnehmung (7) in diametral entgegengesetzter Richtung (10, 11) voneinander auf einer gemeinsamen Höhe abstehen, sowie einen Befestigungsendabschnitt (14) umfasst, der sich rechtwinklig von den Stützflanschen (12, 13) erstreckt, wobei im Inneren des Halters (8) ein Achslager (15) abnehmbar aufgenommen ist, das aus Kunststoffmaterial mit Lagereigenschaften, zum Beispiel Polypropylen, hergestellt ist, wobei ein oberes Niveau (31) des Achslagers (15) bündig mit der oberen Stützfläche (29, 30) der Stützflansche ist, wobei der Befestigungsendabschnitt (14) sich bis zu einer Höhe (22) erstreckt, die die obere Trägerfläche (23) des Halters übersteigt, und wobei an der Oberseite (14A) des Befestigungsendabschnitts (14) ein Flansch (21) angeordnet ist, der zu Sicherungszwecken vorgesehen ist und der in der Richtung (19) von den Stützflanschen (12, 13) und dem Achshalter (8) weg vorsteht und sich entlang (20) des Befestigungsendabschnitts (14) erstreckt.

2. Befestigungsmittel nach Anspruch (1), **dadurch gekennzeichnet, dass** der Halter (8) in der Form eines Gussmetallkörpers vorliegt, der Befestigungslöcher (16, 17, 18) in den Stützflanschen (12, 13) und/oder in dem Befestigungsendabschnitt (14) aufweist.

3. Befestigungsmittel nach einem der vorhergehenden Ansprüche, **dadurch gekennzeichnet, dass** der Montageflansch (21) sich entlang der Längsausdehnung (L) des gesamten Befestigungsendabschnitts erstreckt.

4. Befestigungsmittel nach einem der vorhergehenden Ansprüche, **dadurch gekennzeichnet, dass** die Trägerflansche (12, 13) an dem oberen Abschnitt des Halters gelegen sind.

5. Befestigungsmittel nach Anspruch 4, **dadurch gekennzeichnet, dass** die Ausnehmung (7) des Halters (8) eine gewölbte Grundfläche (25) mit geraden parallelen Seitenwänden (26, 27) aufweist.

6. Befestigungsmittel nach einem der vorhergehenden Ansprüche, **dadurch gekennzeichnet, dass** zwischen dem Achslager (15) und der Ausnehmung (7) ein Sicherungsmechanismus (28), zum Beispiel ein elastischer Haken, angeordnet ist.

7. Befestigungsmittel nach einem der vorhergehenden Ansprüche, **dadurch gekennzeichnet, dass** ein in der Richtung nach unten von einer auf die Stützflansche (12, 13) des Halters schraubbaren Befestigungsplatte (50) vorstehender Zapfen (55) oder ein separater in einem Durchgangsloch (56) in dem Innenraum (7) des Achslagers (15) sowie in einer Ausnehmung (57) in der Achse (2) zum Sichern der Teile aneinander und zum Bilden eines Anschlags für die Drehbewegung der Achse aufnehmbar ist.

## Revendications

1. Moyen de fixation (1) pour un axe (2) d'un lit pliable ajustable (3) ou d'un autre meuble ayant une partie mobile (4, 5), dans lequel un support (8) destiné à un axe (9) en question, et qui est doté d'un renfoncement (7) ouvert dans la direction vers le haut (6), comprend des bords de support (12, 13) dépassant latéralement (10, 11) par rapport au renfoncement (7) dans une direction diamétralement opposée (10, 11) l'un par rapport à l'autre sur un niveau commun ainsi qu'une partie d'extrémité de fixation (14) s'étendant perpendiculairement par rapport auxdits bords de support (12, 13), à l'intérieur dudit support (8), étant reçu à cet endroit de façon amovible un palier d'axe (15), qui est constitué d'une matière plastique ayant des propriétés de palier, par exemple du polypropylène, dans lequel un niveau supérieur (31) dudit palier d'axe (15) est au même niveau que la surface de support supérieure (29, 30) des bords de support, dans lequel la partie d'extrémité de fixation (14) s'étend jusqu'à un niveau (22) surmontant la surface de support supérieure (23) du support, et dans lequel, au-dessus (14A) de la partie d'extrémité de fixation (14), il est prévu un bord (21) à des fins de maintien, et qui dépasse dans la direction s'écartant (19) des bords de support (12, 13) et du support d'axe (8) et s'étend le long (20) de la partie d'extrémité de fixation (14).

2. Moyen de fixation selon la revendication 1, **caractérisé en ce que** le support (8) se présente sous la forme d'un corps en métal moulé ayant des trous de fixation (16, 17, 18) dans les bords de support (12, 13) et/ou dans la partie d'extrémité de fixation (14).

3. Moyen de fixation selon l'une quelconque des revendications précédentes, **caractérisé en ce que** le bord de montage (21) s'étend le long de l'extension en longueur (L) de la partie d'extrémité de fixation entière.

4. Moyen de fixation selon l'une quelconque des revendications précédentes, **caractérisé en ce que** les bords de support (12, 13) sont situés au niveau de la partie supérieure du support.

5. Moyen de fixation selon la revendication 4, **caractérisé en ce que** le renfoncement (7) du support (8) a une surface inférieure courbe (25) et avec des parois latérales parallèles droites (26, 27).

6. Moyen de fixation selon l'une quelconque des revendications précédentes, **caractérisé en ce que**, entre le palier d'axe (15) et le renfoncement (7), un moyen de maintien (28), par exemple un crochet souple, est prévu.

7. Moyen de fixation selon l'une quelconque des revendications précédentes, **caractérisé en ce qu'**un montant (55), qui dépasse dans la direction vers le bas par rapport à une plaque de fixation (50) qui peut être boulonnée sur les bords de support (12, 13) du support, ou un bord séparé, peut être reçu dans un trou traversant (56) dans l'espace intérieur (7) du palier d'axe (15) ainsi que dans un renfoncement (57) dans l'axe (2) pour le maintien desdites parties les unes par rapport aux autres et pour former un arrêt pour le mouvement de rotation de l'axe.
